(19) Europäisches Patentamt

European Patent Office

Office européen des brevets

(11) **EP 4 316 937 B1**

(12) **EUROPEAN PATENT SPECIFICATION**

| | |
|---|---|
| (45) Date of publication and mention of the grant of the patent:<br>**27.11.2024 Bulletin 2024/48** | (51) International Patent Classification (IPC):<br>**B60W 40/02** (2006.01) **B60W 40/08** (2012.01)<br>**B60W 40/10** (2012.01) **B60W 40/12** (2012.01)<br>**B60W 40/00** (2006.01) **B60R 16/037** (2006.01) |
| (21) Application number: **22188685.6** | (52) Cooperative Patent Classification (CPC):<br>**B60R 16/037** |
| (22) Date of filing: **04.08.2022** | |

(54) **ELECTRONIC APPARATUS FOR TRAINABLE VEHICLE COMPONENT SETTING AND VEHICLE**

ELEKTRONISCHES GERÄT FÜR TRAINIERBARE FAHRZEUGKOMPONENTENEINSTELLUNG UND FAHRZEUG

APPAREIL ÉLECTRONIQUE DE RÉGLAGE DE COMPOSANT DE VÉHICULE POUVANT ÊTRE ENTRAÎNÉ ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.02.2024 Bulletin 2024/06**

(73) Proprietor: **e.solutions GmbH**
**85055 Ingolstadt (DE)**

(72) Inventors:
• **KÖHLER, Thomas**
**90766 Fürth (DE)**

• **DEITSCH, Sergiu**
**90491 Nürnberg (DE)**

(74) Representative: **Schornack, Oliver**
**Wuesthoff & Wuesthoff**
**Patentanwälte und Rechtsanwalt PartG mbB**
**Schweigerstraße 2**
**81541 München (DE)**

(56) References cited:
**CN-A- 112 874 456 CN-A- 113 044 045**
**CN-A- 114 741 047 US-A1- 2016 311 399**
**US-A1- 2022 126 864 US-B2- 10 515 390**

**Description**

The present invention relates to an electronic apparatus for vehicle component setting and a vehicle comprising the same. In particular, the present invention relates to an electronic apparatus for trainable vehicle component setting comprising a regressing module trained on the basis of discrete values output by a rounding operator, and a vehicle comprising such apparatus.

WO2021/247364 relates to an electronic apparatus using ground truth information about road wetness, input from one or more sources, such as on-board sensor signals and/or signals from other on-board modules and offboard signals to develop the deep learning model for road wetness classification. The vehicle can be operated in an autonomous driving mode, wherein the wrote condition deep learning model relates to a discrete classification or continuous regression/estimation of road wetness.

In vehicles a plurality of components can be adjusted manually or automatically, such as a seat, a ventilation system or an air-conditioning system. Some vehicles offer a memory function, to store settings for one or more components for a particular user (driver), such as a user profile containing preferred settings for a seat, steering wheel and mirrors. If the user is identified and/or authenticated, the component(s) can be adjusted according to the user profile.

However, the component settings are static, i.e., only user-related, such as a particular inclination of a backrest of a seat, longitudinal position of the seat within the vehicle, ventilation speed and/or preferred audio source. There is no context-related way of personalising the vehicle automatically, besides the user identification.

Therefore, it is an object of the present invention to provide an apparatus for improved vehicle component setting.

This object is solved by an electronic apparatus comprising the features of claim 1, and a vehicle comprising the features of claim 4.

Preferred embodiments are defined by the dependent claims.

According to a first aspect to better understand the present disclosure, an electronic apparatus for vehicle component setting comprises a sensor signal interface configured to connect to a plurality of vehicle sensors, a regressing module configured to receive a sensor signal output by each of the plurality of vehicle sensors and to predict a continuous component setting value based on the received sensor signals, a rounding operator configured to round the continuous component setting value predicted by the regressing module to a discrete component setting value and to output the discrete component setting value, and a component interface configured to connect to at least one vehicle component and further configured to transmit a setting signal corresponding to the discrete component setting value to the at least one vehicle component. Such apparatus is capable of outputting a discrete component setting value for at least one vehicle component based on signals from a plurality of vehicle sensors. While such sensors can form a context, i.e., a particular situation in which the vehicle and/or the driver is, the regression module is able to predict a component setting on the basis of this context. A continuous component setting value means any stepless value, such as a value having one or more decimals, whereas a discrete component setting value means a value having one of a definite amount of possible values, such as an integer number.

The electronic apparatus further comprises a controller configured to train the regressing module based on training data and the corresponding discrete component setting value output by the rounding operator. In other words, the regressing module is trained end-to-end, i.e., from the context-forming sensor signals to the discrete component setting value.

As an example, a regressing model (or simply referred-to as a regressor) usually models a target level continuously, for example, outputs a target level of 1.35. However, the majority of vehicle components require discrete setting values, such as a wiper having the levels "off", "slow" or "interval", "medium" and "fast" or a ventilation system having the levels "off" and a distinct speed level between 1 and 9, for example. Thus, the output target level of 1.35 would not match any of such discrete component setting levels.

Training the regressing model based on the output of the rounding operator, according to the present disclosure, significantly improves context-based vehicle component setting, since the trained regressing module outputs a continuous component setting value that will reliably and replicable rounded to the correct discrete component setting value by the rounding operator.

Although a classification module could be employed instead of the regressing model, since a classification module outputs discrete target levels, such classification does not consider ordering of levels. In other words, a classification usually assigns equal weights to each level, so that a misclassification (incorrect prediction) may have a significant influence on user satisfaction. As an example only, if a wiper is set to "fast" from an "off" state, this may be irritating, particularly if the user would expect a slow or interval wiper level. Another way of predicting a target level could be a probability calibration, such as a softmax activation. However, since such approach learns probability distributions rather than output levels, a high error can be caused as with the classification module. Thus, in both cases user satisfaction may not be met, since there is a high probability of false prediction.

Therefore, the present disclosure combines a regressor and a rounding operator, wherein the regressor is trained on the basis of the output of the rounding operator. Such regressor can handle an input of high dimensions, for example, the input from a plurality of sensors and/or other signal representing a context and can be trained efficiently.

A differentiable rounding operator can be employed, that reliably and replicable rounds the continuous value input from the regressor to a discrete target value.

Such combination of regressor and differentiable rounding operator allows training the regressor even with training data, that does not cover all possible target levels. For example, the training data may comprise only a subset of target levels for a wiper, such as "off", "slow" and "fast" (or in a numerical scale [0, 1, 3]), which can be effectively learned/trained by the regressor. The regressor alone could output a target level "medium" ([2]), although it was never trained, since the regressor (while being trained) interpolates and thus arrives at any possible level.

In an implementation variant the regressing module can comprise an artificial neural network (simply referred-to as a neural network) or a support vector machine (a supervised learning model). Both trainable models are differentiable by design, i.e. can be trained with respect to discrete target levels/values. Any regression loss can be used. For example, different costs for different error types can be implemented in an efficient way, such as a target = 1 and an actual value =2 causes an error of 1 while a target = 1 and an actual value = 3 causes an error of 2, which allows efficient training of the underlying model.

In another implementation variant the rounding operator can be configured to employ a sigmoid function, a sum of sigmoid functions, a rectified linear unit activation function, a Fourier transformation, a kernel density estimation, or a mapping function.

For instance, a sigmoid function can round a scalar in an interval of [-1, 1], which once applied to the continuous component setting value predicted by the regressor allows outputting a discrete component setting value.

In another example, a sum of sigmoid functions may further be based on modified versions of sigmoid functions, such as

$$f(x) = \sum_{i=1}^{n} \frac{\alpha}{1 + e^{-T*(x-x_i)}}$$

wherein T denotes the steepness, $x_i$ denotes an offset for level i, and alpha ($\alpha$) denotes a scaling factor. Such sum of sigmoid functions allows excluding terms in the sum to exclude a level that is not covered by the training data.

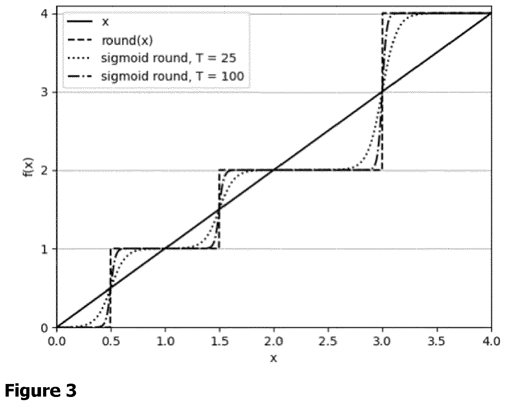

For instance, Figure 3 illustrates sigmoid rounding functions having a different steepness as well as an optimal rounding operator "round(x)". As is derivable from Figure 3, a target level of "f(x) = 3" was not seen during training and can easily be excluded by the electronic apparatus of the present disclosure.

In yet further examples, variants of a rectified linear unit (ReLU) activation function (Exponential Linear Unit (ELU), LeakyReLU, Gaussian Error Linear Unit (GELU)) can be employed as the rounding operator. This avoids vanishing gradients. A Fourier transformation can describe rounding with multiple levels by step functions to obtain differentiable approximations, a kernel density estimation can describe rounding by a sum of kernel functions, such as a Gaussian kernel, which also leads to differentiable approximation. Furthermore, mapping functions, such as a floor function that maps a continuous regressor output to smaller discrete levels or a ceiling function that maps a continuous regressor output to a larger discrete level, may likewise be employed. Such mapping functions may be achieved by shifting a sigmoid function towards mappings to a lower level and larger level, respectively. As an example only, the setting of a heating of a seat or steering wheel could be rounded to a smaller value, in order to avoid uncomfortable settings to a level sensed as to warm.

The aim of the present disclosure is a differentiable (discrete) component setting value, and, where possible, additionally the avoidance of vanishing gradients, i.e. zero gradients.

For instance, ReLU defines a function f(x) = max (0, x), wherein max (a, b) outputs the maximum of a and b. Such function is sub-differentiable, but avoids a vanishing gradient for x >0. A Fourier transformation of an exact rounding function (as in Figure 3) can be calculated. By deleting/cutting certain "frequencies" a differentiable function can be achieved, comparable to one of the sigmoid functions shown in Figure 3. In case of the kernel density estimation, a rounding takes place by superimposing a plurality of differentiable kernel functions (form a sum). The sum itself is also differentiable.

According to a second aspect to better understand the present disclosure, a vehicle comprises an electronic apparatus according to the first aspect or one of its implementation variants.

In an implementation variant of the vehicle, the plurality of vehicle sensors can comprise at least one of an interior thermometer, an exterior thermometer, a light sensor, a humidity sensor, a rain sensor, a vehicle speed sensor, a vibration sensor, a gyroscope, a positioning sensor, a user identification sensor, and a clock. This list of sensors is not limiting, but any sensor available and implementable in a vehicle can be used and the respective sensor signal can be employed for predicting the setting of at least one vehicle component. As an example only, a certain exterior temperature and a certain interior temperature (with respect to a passenger compartment of the vehicle) may be compared, in order to adjust the level of ventilation and/or air-conditioning of the interior of the vehicle. A certain time of the day may influence the setting of the seat position adjustment or a massage function of a driver's seat, etc.. It is to be understood that any combination of sensor signals can be provided to the regressor, which leads to a more or less complete context-related setting of one or more vehicle components.

In another implementation variant, the vehicle can further comprise a driver assistance system configured to output at least one signal to the sensor signal interface. Thus, if the vehicle already comprises a driver assistance system, information already at hand can be used in form of signals with the electronic apparatus for predicting the vehicle component setting. As an example only, if the driver assistance system comprises a camera capturing the driver, a reaction in the driver's face (e.g., smaller pupils, narrowing eyebrows or the like) may tell that the driver is dazzled by a light. If a light sensor outputs a signal of an intense sunlight or of lights of a succeeding vehicle, the regressing module can be trained to output a component setting value for a sun shade or a rear mirror, respectively. It is to be understood that any combination of sensors signals and/or signals from an already present vehicle system can be used to train the regressing module.

In yet another implementation variant, the at least one vehicle component comprises at least one of a ventilation system, a heating system, an air-conditioning system, a wiper control, a seat adjustment system, a driving mode setting system, a driver assistance system, a light system, a mirror setting system, an entertainment system, a window lifter, and a sunroof lifter. This list is to be understood as not limiting the present disclosure. The regressing module can be trained to adjust settings for any of those vehicle components and/or any combination of those vehicle components. As an example only, if the air-conditioning system is switched on or adjusted to a higher cooling rate, a window and/or sunroof may be closed.

In a further implementation variant, the controller of the vehicle's apparatus may be a dedicated processor or may form part of a vehicle computing system, such as an engine control unit (ECU). The processor of the vehicle's apparatus may output a signal and/or data representing the discrete component setting value.

The present disclosure is not restricted to the aspects and variants in the described form and order. Specifically, the description of aspects and variants is not to be understood as a specific limiting grouping of features. It is to be understood that the present disclosure also covers combinations of these aspects and variants. Thus, each variant or optional feature can be combined with any other aspect, variant, optional feature or even combinations thereof.

Preferred embodiments of the invention are now explained in greater detail with reference to the enclosed schematic drawings, in which

Figure 1    schematically illustrates an electronic apparatus for vehicle component setting,

Figure 2    schematically illustrates a vehicle with an electronic apparatus according to the present disclosure, and

Figure 3    depicts a diagram schematically illustrating a relation between a continuous component setting value and a rounded component setting value.

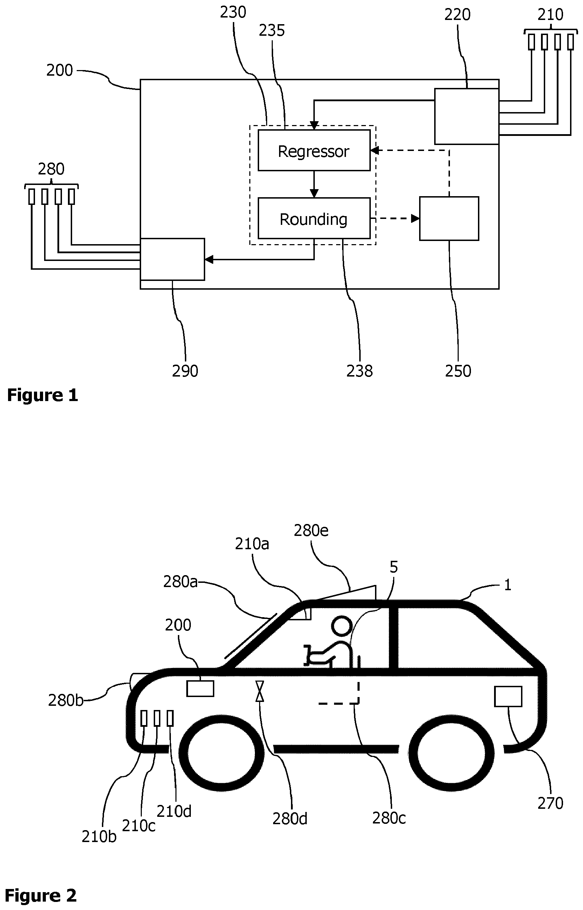

Figure 1 schematically illustrates an electronic apparatus 200 for vehicle component setting. The apparatus 200 may be connected or linked to a plurality of sensors 210 on the one hand, and one or more vehicle components 280 on the other hand. A sensor signal interface 220 is provided that can be employed to connect the electronic apparatus 200 to the plurality of vehicle sensors 210. This connection may be any electric line or data bus capable of transmitting sensor signals output by each of the plurality of vehicle sensors 210 to the sensor signal interface 220.

Likewise, a component interface 290 can be employed to connect the electronic apparatus 200 to at least one vehicle component 280. The component interface 290 allows transmitting a setting signal to each of the at least one vehicle component 280. This connection may also be any electric line or data bus capable of transmitting a setting signal output by the electronic apparatus to any of the connected vehicle component(s) 280.

A prediction module 230 in the electronic apparatus 200 is capable of processing the sensor signal(s) received at the sensor signal interface 220 and generate a component setting value that matches with a discrete setting of any one of the vehicle components 280. For instance, the prediction module 230 can comprise a regressing module 235 configured to receive sensor signal output by each of the plurality of vehicle sensors 210 via the sensor signal interface 220 and to predict a continuous component setting value based on the received sensor signal(s). Such regressing module 235 is capable of handling a plurality of input signals, in order to predict on the basis of these signals one or more output values.

It is to be understood that more than one regressing module 235 can be employed, wherein each regressing module 235 is specialised for one vehicle component 280. Thus, each regressing module 235 can output a vehicle component setting value for a particular vehicle component 280 based on any number of sensor signals received from the sensor signal interface 220.

The prediction module 230 can further comprise a rounding operator 238 configured to round the continuous component setting value predicted by the regressing module 235. The rounding operator 238 rounds the continuous value to a discrete component setting value, which corresponds to a discrete setting of one of the vehicle components 280.

It is to be understood that the rounding operator 238 can round a plurality of continuous component setting values distinctly and simultaneously, one for each vehicle component 280. In case that a plurality of regressing modules 235 are employed, the rounding operator 238 can be configured to round each of the values output by the plurality of regressing modules 235 simultaneously but separately, so that a plurality of discrete component setting values are output by the rounding operator 238. Likewise, the prediction module 230 can comprise a plurality of rounding operators 238, one for each regressing module 235.

The electronic apparatus 200 further comprises a controller 250 configured to train the regressing module 235 based on training data and the corresponding discrete component setting value output by the rounding operator 238. In more detail, the training data can comprise one or more sensor signals and one or more target component setting values. The sensor signals of the training data is fed to the regressing module 235, which outputs a continuous component setting value. After rounding the continuous component setting value predicted by the regressing module 235, the controller 250 trains the regressing module 235 based on the target component setting value(s).

It is to be understood that the training of the regressing module 235 can take place before the electronic apparatus 200 is implemented in a vehicle 1 (see Figure 2). Alternatively or additionally, the controller 250 can be configured to train the regressing module 235 continuously, i.e. during the actual use of the electronic apparatus 200. As an example only, if a certain context, i.e., sensor signals, such as increasing exterior temperature, leads to the output of a discrete component setting value for the ventilation system (e.g., speeding up the ventilation), and shortly thereafter the user decreases the speed of the ventilation, the controller 250 can train the regressing module 235, so that a discrete component setting value is output that corresponds to the lower ventilation speed set by the user.

The controller 250 trains the regressing module 235, in any case, based on the output of the rounding operator 238. This allows an improved vehicle component setting, since the continuous component setting values predicted by the regressing module 235 can be trained to lead to the correct discrete target component setting value.

Figure 2 schematically illustrates a vehicle 1 comprising an electronic apparatus 200, such as the apparatus 200 of Figure 1. The electronic apparatus 200 can be implemented as a separate entity within the vehicle 1. Alternatively, the electronic apparatus 200 can be integrated into an already present electronic device, such as an ECU, an on-board computing device or the like.

The vehicle may be equipped with a plurality of sensors 210. Such sensors can include a light and/or rain sensor 210a, which may be part of the vehicle 1 installed behind the windshield. Further sensors are schematically illustrated within the vehicle 1, which can comprise an exterior thermometer 210b measuring a temperature of the air outside of and surrounding the vehicle 1, an interior thermometer 210c measuring a temperature inside of a passenger compartment of the vehicle 1, and a positioning sensor 210d measuring a position of the vehicle 1, for example, in a global coordinate system. It is to be understood that the vehicle 1 can comprise further sensors, such as a humidity sensor (exterior as well as interior), a vehicle speed sensor, a vibration sensor, a gyroscope, a user identification sensor or a clock.

All of these sensors and particularly their respective sensor signals describe a context for the vehicle at a particular time. This context, particularly any change of sensor signal, can lead to a different output of the regressing module 235 and, hence, to a different output of the rounding operator 238, so that one or more vehicle components 280 are set differently.

Such vehicle components 280 can comprise a wiper control 280a controlling the speed of a windshield wiper or another wiper, a light system 280b such as headlights of the vehicle, a seat adjustment system 280c (including a massage function or softness setting of the seat), a ventilation system 280d ventilating air into and/or within the passenger compartment of the vehicle 1, and a sunroof lifter 280e capable of opening and closing a sunroof.

It is to be understood that further vehicle components 280 can be employed, which are not explicitly illustrated in Figure 2. For instance, a heating system, an air-conditioning system, driving mode setting system, a mirror setting system, and entertainment system or a window lifter can be part of the vehicle 1 and be controlled by the electronic apparatus 200, to name a few.

Moreover, a driver assistance system 270 can be implemented in the vehicle 1. This driver assistance system 270 can be contemplated as a vehicle component, too. As an example only, if the prediction module 230 outputs a setting value for the wiper control that increases the speed of the wiper, the driver assistance system 270 may be provided with a setting value corresponding to increased rain, so that the driver assistance system 270 may reduce the amount of time until remembering the driver to make a break or the like.

Likewise, the driver assistance system 270 can be contemplated, alternatively or additionally, as a (vehicle) sensor 210. For instance, the driver assistance system 270 may derive information about the driver, the vehicle or a context of the vehicle, which can be employed by the electronic apparatus 200, particularly by the prediction module 230. As an example only, a state of the driver and/or a state of a driving mode (such as autonomous or semi-autonomous driving) and/or a state of the road the vehicle is travelling on can influence the adjustment of certain vehicle components, such as a seat adjustment system 280c, an engine control system, a gearbox mode control, an entertainment system or the like.

The above description of the drawings is to be understood as providing only exemplary embodiments of the present invention and shall not limit the invention to these particular embodiments.

## Claims

1. An electronic apparatus (200) for vehicle component setting, the device comprising:

   a sensor signal interface (220) configured to connect to a plurality of vehicle sensors (210); a regressing module (235) configured to receive a sensor signal output by each of the plurality of vehicle sensors (210) and to predict a continuous component setting value based on the received sensor signals; a rounding operator (238) configured to round the continuous component setting value predicted by the regressing module (235) to a discrete component setting value and to output the discrete component setting value; a component interface (290) configured to connect to at least one vehicle component (280) and further configured to transmit a setting signal corresponding to the discrete component setting value to the at least one vehicle component (280); and a controller (250) configured to train the regressing module (235) based on training data and the corresponding discrete component setting value output by the rounding operator (238).

2. The electronic apparatus (200) according to claim 1, wherein the regressing module (235) comprises an artificial neural network or a support vector machine.

3. The electronic apparatus (200) according to claim 1 or 2, wherein the rounding operator (238) is further configured to employ a sigmoid function, a sum of sigmoid functions, a rectified linear unit activation function, a Fourier transformation, a kernel density estimation, or a mapping function.

4. A vehicle (1), comprising:
   an electronic apparatus (200) according to one of claims 1 to 3.

5. The vehicle (1) according to claim 4, wherein the plurality of vehicle sensors (210) comprises at least one of an interior thermometer, an exterior thermometer, a light sensor, a humidity sensor, a rain sensor, a vehicle speed sensor, a vibration sensor, a gyroscope, a positioning sensor, a user identification sensor, and a clock.

6. The vehicle (1) according to claim 4 or 5, further comprising:
   a driver assistance system (270) configured to output at least one signal to the sensor signal interface (220).

7. The vehicle (1) according to one of claims 4 to 6, wherein the at least one vehicle component (280) comprises at least one of a ventilation system (280d), a heating system, an air-conditioning system, a wiper control (280a), a seat adjustment system (280c), a driving mode setting system, a driver assistance system (270), a light system (280b), a mirror setting system, an entertainment system, a window lifter, and a sunroof lifter (280e).

## Patentansprüche

1. Elektronische Vorrichtung (200) für die Einstellung von Fahrzeugkomponenten, wobei die Vorrichtung umfasst:

   eine Sensorsignalschnittstelle (220), die dazu eingerichtet ist, sich mit einer Mehrzahl von Fahrzeugsensoren (210) zu verbinden; ein Regressionsmodul (235), das dazu eingerichtet ist, ein von jedem der Mehrzahl von Fahrzeugsensoren (210) ausgegebenes Sensorsignal zu empfangen und einen kontinuierlichen Komponenteneinstellwert auf der Grundlage der empfangenen Sensorsignale vorherzusagen; einen Rundungsoperator (238), der dazu eingerichtet ist, den von dem Regressionsmodul (235) vorhergesagten kontinuierlichen Komponenteneinstellwert auf einen diskreten Komponenteneinstellwert zu runden und den diskreten Komponenteneinstellwert auszugeben; eine Komponentenschnittstelle (290), die dazu eingerichtet ist, eine Verbindung zu mindestens einer Fahrzeugkomponente (280) herzustellen, und die ferner dazu eingerichtet ist, ein dem diskreten Komponenteneinstellwert entsprechendes Einstellsignal an die mindestens eine Fahrzeugkomponente (280) zu übertragen; und eine Steuerung (250), die dazu eingerichtet ist, das Regressionsmodul (235) auf der Grundlage von Trainingsdaten und dem entsprechenden diskreten Komponenteneinstellwert, der von dem Rundungsoperator (238) ausgegeben wird, zu trainieren.

2. Elektronische Vorrichtung (200) nach Anspruch 1, wobei das Regressionsmodul (235) ein künstliches neuronales Netz oder eine Support-Vektor-Maschine umfasst.

3. Elektronische Vorrichtung (200) nach Anspruch 1 oder 2, wobei der Rundungsoperator (238) ferner dazu eingerichtet ist, eine Sigmoidfunktion, eine Summe von Sigmoidfunktionen, eine gleichgerichtete lineare Einheitsaktivierungsfunktion, eine Fouriertransformation, eine Kernel-Dichte-Schätzung (kernel density estimation) oder eine Abbildungsfunktion zu verwenden.

**4.** Fahrzeug (1), umfassend:
eine elektronische Vorrichtung (200) nach einem der Ansprüche 1 bis 3.

**5.** Fahrzeug (1) nach Anspruch 4, wobei die Mehrzahl von Fahrzeugsensoren (210) mindestens eines der folgenden Elemente umfasst: ein Innenthermometer, ein Außenthermometer, einen Lichtsensor, einen Feuchtigkeitssensor, einen Regensensor, einen Fahrzeuggeschwindigkeitssensor, einen Vibrationssensor, ein Gyroskop, einen Positionssensor, einen Benutzeridentifikationssensor und eine Uhr.

**6.** Fahrzeug (1) nach Anspruch 4 oder 5, ferner umfassend:
ein Fahrerassistenzsystem (270), das dazu eingerichtet ist, mindestens ein Signal an die Sensorsignalschnittstelle (220) auszugeben.

**7.** Fahrzeug (1) nach einem der Ansprüche 4 bis 6, wobei die mindestens eine Fahrzeugkomponente (280) mindestens eines der folgenden Elemente umfasst: ein Belüftungssystem (280d), ein Heizungssystem, ein Klimatisierungssystem, eine Wischersteuerung (280a), ein Sitzverstellsystem (280c), ein Fahrmodus-Einstellsystem, ein Fahrerassistenzsystem (270), ein Beleuchtungssystem (280b), ein Spiegeleinstellsystem, ein Unterhaltungssystem, einen Fensterheber und einen Schiebedachheber (280e).

## Revendications

**1.** Appareil électronique (200) pour le réglage de composants de véhicule, le dispositif comprenant:

une interface de signal de capteur (220) configurée pour se connecter à plusieurs capteurs du véhicule (210);
un module de régression (235) configuré pour recevoir un signal de capteur émis par chacun de la pluralité de capteurs de véhicule (210) et pour prédire une valeur de réglage de composant continu sur la base des signaux de capteur reçus;
un opérateur d'arrondissement (238) configuré pour arrondir la valeur de réglage de composant continu prédite par le module de régression (235) à une valeur de réglage de composant discrète et pour émettre la valeur de réglage de composant discrète;
une interface de composant (290) configurée pour se connecter à au moins un composant de véhicule (280) et configurée en outre pour transmettre un signal de réglage correspondant à la valeur de réglage de composant discrète à l'au moins un composant de véhicule (280); et
un organe de commande (250) conçu pour entraîner le module de régression (235) sur la base des données d'entraînement et de la valeur de réglage de composant discrète correspondant fournie par l'opérateur d'arrondissement (238).

**2.** Appareil électronique (200) selon la revendication 1, dans lequel le module de régression (235) comprend un réseau neuronal artificiel ou une machine à vecteurs de support.

**3.** Appareil électronique (200) selon la revendication 1 ou 2, dans lequel l'opérateur d'arrondissement (238) est en outre configuré pour utiliser une fonction sigmoïde, une somme de fonctions sigmoïdes, une fonction d'activation d'unité linéaire rectifiée, une transformation de Fourier, une estimation de la densité du noyau ou une fonction de mappage.

**4.** Véhicule (1), comprenant:
un appareil selon l'une quelconque des revendications 1 ou 3.

**5.** Véhicule (1) selon la revendication 4, dans lequel la pluralité de capteurs de véhicule (210) comprend au moins l'un parmi un thermomètre intérieur, un thermomètre extérieur, un capteur de lumière, un capteur d'humidité, un capteur de pluie, un capteur de vitesse de véhicule, un capteur de vibrations, un gyroscope, un capteur de positionnement, un capteur d'identification d'utilisateur et une horloge.

**6.** Véhicule (1) selon la revendication 4 ou 5, comprenant en outre:
un système d'aide à la conduite (270) conçu pour émettre au moins un signal vers l'interface de signal de capteur (220).

**7.** Véhicule (1) selon l'une quelconque des revendications 4 à 6, dans lequel l'au moins un composant de véhicule (280) comprend au moins l'un parmi un système de ventilation (280d), un système de chauffage, un système de climatisation, une commande d'essuie-glace (280a), un système de réglage de siège (280c), un système de réglage de mode de conduite, un système d'aide à la conduite (270), un système d'éclairage (280b), un système de réglage de rétroviseurs, un système de divertissement, un lève-vitre et un dispositif de levage de toit ouvrant (280e).

**Figure 1**

**Figure 2**

**Figure 3**

**EP 4 316 937 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021247364 A